Europäisches Patentamt

European Patent Office

Office européen des brevets

(19)

(11) Publication number: **0 380 691**

**A1**

(12)

# EUROPEAN PATENT APPLICATION
## published in accordance with Art. 158(3) EPC

(21) Application number: 89908281.2

(22) Date of filing: 05.07.89

(86) International application number:
PCT/JP89/00680

(87) International publication number:
WO 90/01185 (08.02.90 90/04)

(51) Int. Cl.⁵: **G05B 19/403, G05B 19/405**

(30) Priority: 22.07.88 JP 181748/88

(43) Date of publication of application:
08.08.90 Bulletin 90/32

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **MIYATA, Mitsuto**
**2-2-4, Nanyodai Hachioji-shi**
**Tokyo 192-03(JP)**
Inventor: **MATSUMURA, Teruyuki**
**38-8, Matsugaya Hachioji-shi**
**Tokyo 192-03(JP)**
Inventor: **MINESHIGE, Takahiko Room A-346**
**Seikodenshikogyotakatsukadokushinryo**
**620-42**
**Takatsukashinden Matsudo-shi Chiba**
**271(JP)**

(74) Representative: **Billington, Lawrence Emlyn et al**
**Haseltine Lake & Co Hazlitt House 28,**
**Southampton Buildings Chancery Lane**
**London WC2A 1AT(GB)**

(54) AUTOMATIC PROGRAMMING METHOD FOR COMPOSITE NC LATHE.

(57) This invention relates to an automatic programming method for a composite NC lathe which can reliably prepare an NC program capable of executing milling work after machining associated with a milling margin is complete, hence can shorten a required milling time and can prolong tool life and is equipped with a milling function. If a portion to which drilling is made, a final product dimension in a machining direction and a work dimension obtained by executing an NC program prepared before the input of a drill command as a milling command are judged non-coincident when such a drill command is inputted (S2), an alarm message representing that finish of drilling surface is not yet complete is displayed (S3). An operator stops the preparation of the NC program in accordance with this alarm message and compiles the NC program so as to program a command group for conducting the finish work of the drilling surface.

FIG.1

START

EXAMINE PRODUCT
DIMENSION AND
WORKPIECE DIMENSION — S1

DISAGREEING
WITH PRODUCT
DIMENSION ? — S2

NO

YES

DISPLAY WARNING — S3

TO BE
CONTINUED ? — S4

NO

YES S5

CONTINUE
PROCESSING

STOP

1a

SPECIFICATION

AUTOMATIC PROGRAMMING METHOD FOR A COMPLEX NC LATHE

Technical Field

The present invention relates to an automatic programming method for a complex NC lathe with a milling function.

Background Art

As is generally known, an NC program used for the operation control of a complex NC lathe combining the function of a lathe with the functions of a drilling machine and a milling machine is prepared by an automatic programming method. According to the conventional method, however, an NC program may be prepared such that finish machining of a workpiece surface to be drilled is performed after the drilling, or that finish machining of a workpiece surface to be subjected to contour machining by means of a milling tool is performed after the contour machining, for example, or otherwise, an NC program program may be prepared such that finish machining of a workpiece surface intersecting a workpiece surface to be subjected to surface grinding by means of a milling tool is performed after the surface grinding. In this case, extra drilling or contour machining must be effected for a finish machining allowance, or otherwise, extra surface grinding must be effected for a region of an area equivalent to the product of the finish machining allowance and the length of the line of intersection of the ground surface and the finished surface. Thus, if the sequence of execution of milling, such as drilling, contour machining, surface grinding, etc., or machining (finish machining, for instance) associated with a milling allowance is inappropriate, as described above, the milling

- 2 -

allowance increases. As a result, the necessary milling time increases, and the tool lifetime shortens.

### Disclosure of the Invention

The object of the present invention is to provide an automatic programming method for a complex NC lathe with a milling function, in which an NC program can be securely prepared such that milling and machining associated with a milling allowance can be executed in a proper sequence, so that the necessary milling time can be reduced, and the tool lifetime can be lengthened.

In order to achieve the above object, an automatic programming method according to the present invention comprises steps of: (a) determining, at the time of entry of a milling command, whether an instruction for predetermined machining associated with a milling allowance is described in an NC program prepared by the time of the command entry, and (b) displaying a warning when it is concluded that the instruction is not described.

According to the present invention, as described above, the warning is displayed if the instruction for the machining associated with the milling allowance is not described in the NC program when the milling command is entered, so that preparation of an NC program such that milling is executed before machining influencing the milling allowance is finished can be securely prevented. Thus, the milling allowance can be minimized, the necessary milling time can be reduced, and the tool lifetime can be lengthened.

### Brief Description of the Drawings

Fig. 1 is a flow chart showing an automatic programming method for a complex NC lathe according to one embodiment of the present invention;

Fig. 2 is a schematic block diagram showing a principal part of an interactive automatic programming apparatus for effecting the method of Fig. 1;

Fig. 3 is a diagram showing drilling with a substantial machining allowance; and

Fig. 4 is a diagram showing drilling with a small machining allowance.

Best Mode of Carrying Out the Invention

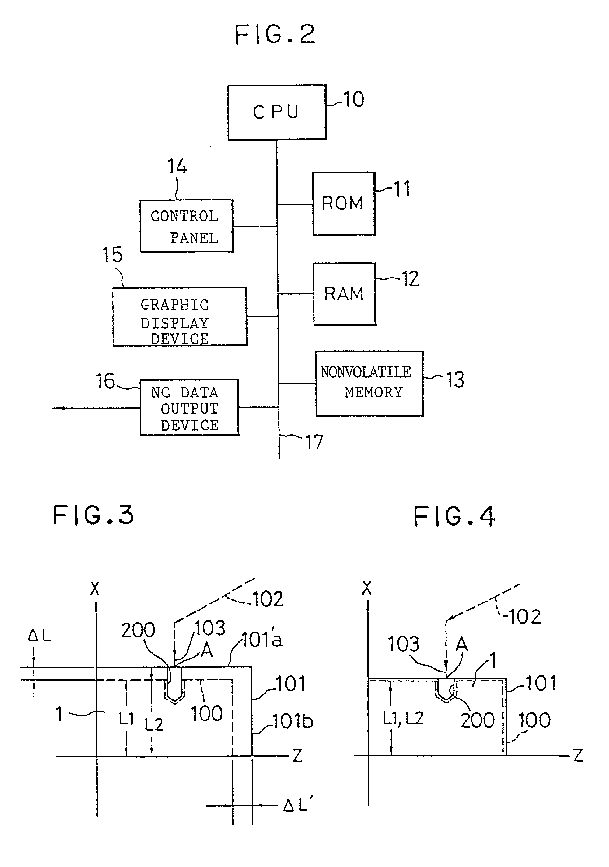

A complex NC lathe (not shown), which is used with an interactive automatic programming apparatus for effecting a method according to one embodiment of the present invention, has functions to effect milling work, such as drilling, contour machining, surface grinding, etc. In connection with this, the complex NC lathe is provided with a tool (not shown) having a spindle function, such as a drill, milling cutter, etc., and is arranged to determine the rotational position (C-axis position) of a workpiece 1 with respect to the spindle (Z-axis of Figs. 3 and 4) of the complex NC lathe.

Basically, the interactive automatic programming apparatus is constructed in the same manner as a conventional one. More specifically, a central processing unit (hereinafter referred to as CPU) 10 of the automatic programming apparatus is connected, by means of a bus 17, with a ROM 11 stored with a control program for interactive automatic programming of an NC program, a RAM 12, a nonvolatile memory 13 stored with various data for automatic programming, such as a tool file, a control panel 14 having various keys including software keys, a graphic display device 15, and an NC data output device 16, as shown in Fig. 2.

Further, the automatic programming apparatus, like a conventional one, is arranged to automatically

- 4 -

prepare the NC program in accordance with an interaction with an operator through the graphic display device 15. Thus, the CPU 10 causes the graphic display device 15 to display a question message thereon, as required, during the execution of the automatic programming in accordance with the control program stored in the ROM 11. In response to this question message, the operator operates the various keys of the control panel 14, thereby entering various data, such as dimensions and shapes of the material and of final products, etc., with reference to a design drawing, for example. Thereupon, the input data are stored in the RAM 12. These input data and the various data stored in the nonvolatile memory 13 are utilized for the automatic programming. Further, the NC program prepared in this manner is temporarily stored in the RAM 12, and is then transferred through the NC data output device 16 to a numerical control device attached to the complex NC lathe or an external memory.

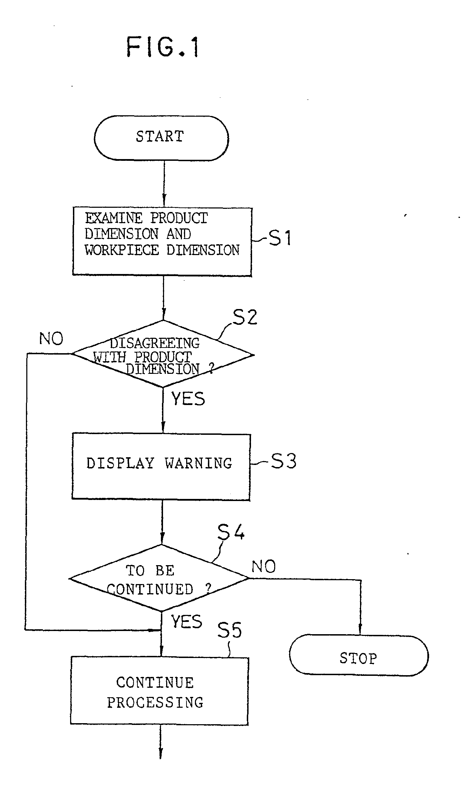

Referring now to Figs. 1 to 4, the automatic programming method according to the present embodiment will be described.

The NC program prepared by the method of the present embodiment is intended to manufacture a final product of the shape indicated by broken line 100 in Figs. 3 and 4, as the simplest example. In Figs. 3 and 4, full line 101 indicates a workpiece shape obtained when the NC program prepared by the time of the entry of a milling command (drilling command) is executed, and full line 200 indicates a sectional shape of a drilled hole to be formed in the workpiece. Arrows 102 and 103 indicate a fast feed path and a cutting feed path, respectively, for the drill used in the formation of the drilled hole 200. In Fig. 3, symbol $\Delta L$

designates a machining allowance for the finish machining of a drilled surface 101a.

When the operator enters the drilling command as the milling command by operating specific keys of the control panel 14 during the preparation of the NC program, the CPU 10 of the automatic programming apparatus examines (Step S1) a final product dimension (designated by symbol L1 in Figs. 3 and 4) in the direction of the finish machining of the drilled surface, passing through a drilling region (milling region) A designated by the drilling command, and a workpiece dimension (designated by symbol L2 in Figs. 3 and 4) corresponding to the final product dimension, the workpiece dimension being obtained when a group of instructions described in the unfinished NC program prepared by the time of the entry of the command concerned is executed.

Subsequently, the CPU 10 compares the final product dimension L1 and the workpiece dimension L2, and determines (Step S2) whether the two dimensions agree within a permissible machining error range. If it is concluded that the final product dimension L1 and the workpiece dimension L2 agree, as shown in Fig. 4, that is, if it is concluded that the group of instructions for the finish machining of the drilled surface is already described in the NC program, and therefore, the NC program is prepared so that the finish machining of the drilled surface can be finished before starting the drilling (milling), the program proceeds to Step S5, whereupon the preparation of the NC program is continued. More specifically, after the group of instructions related to the drilling (milling) is programmed in accordance with the drilling (milling) command and data entered afterward in association with the command, a subsequent process for NC program preparation is executed.

If it is concluded in Step S2, on the other hand, that the final product dimension L1 and the workpiece dimension L2 disagree (Fig. 3), that is, if it is concluded that the group of instructions for the machining for the drilled surface 101a, including the finish machining of the drilled surface, is not described in the NC program, and therefore, the NC program is prepared so that the drilling can be performed before the machining of the drilled surface is finished, the CPU 10 causes the graphic display device 15 to display a warning message to the effect that "FINISH MACHINING IS NOT FINISHED" on its screen, and inquires of the operator as to whether the preparation of the NC program should be continued (Step S3).

If the operator, in response to the warning message, enters a command to the effect that the program preparation should be terminated, by operating specific software keys (Step S4), the CPU 10 terminates the automatic programming without executing the program preparation associated with the drilling (milling) command. Then, the operator edits the unfinished NC program as required. More specifically, the operator operates the control panel 14 to enter a required command and data associated therewith so that the group of instructions for the finish machining of the drilled surface 101a can be inserted in the right place in the NC program. Subsequently, the drilling command is entered again at the end of the NC program. In this case, it is concluded in Step S2 of Fig. 1 that the final product dimension L1 and the workpiece dimension L2 agree, whereupon the program proceeds to Step S5.

- 7 -

In this manner, the NC program is prepared so that the drilling (milling) allowance is minimized to eliminate wasteful drilling (milling).

If it is concluded, on the other hand, that the preparation of the NC program should be continued for some reason, despite the display of the warning message, the operator operates other specific software keys to enter a command to the effect that the program preparation should be continued (Step S4). In this case, the program proceeds to Step S5.

The present invention is not limited to the embodiment described above, and various modifications may be effected therein. Although the drilling is performed as milling in the aforementioned embodiment, for example, it may be also applied to contour machining or surface grinding of the workpiece surface using a milling tool. If an instruction for the surface grinding is programmed before the group of instructions for the finish machining for the machining allowance $\Delta L'$ for a drilled surface 101b, which intersects a ground surface corresponding to the drilled surface 101a of Fig. 3, is programmed, for example, it is necessary to perform extra surface grinding for a region of an area equivalent to the product of the finish machining allowance $\Delta L'$ and the Y-axis length (length of the line of intersection of the finished surface 101b and the ground surface) of the workpiece. According to the present invention, however, such an awkward situation can be avoided.

- 8 -

# CLAIMS

1. An automatic programming method for a complex NC lathe having a milling function, comprising steps of:

(a) determining, at the time of entry of a milling command, whether an instruction for predetermined machining associated with a milling allowance is described in an NC program prepared by the time of said command entry; and

(b) displaying a warning when it is concluded that said instruction is not described.

2. An automatic programming method for a complex NC lathe having a milling function according to claim 1, wherein it is concluded in said step (a) that said instruction is described if a workpiece dimension with respect to a region and a machining direction for said predetermined machining agrees with a final product dimension when the execution of the NC program prepared by the time of the entry of said milling command is finished.

3. An automatic programming method for a complex NC lathe having a milling function according to claim 1, wherein whether an instruction for the execution of a corresponding one of finish machining of a workpiece surface to be milled and finish machining of a workpiece surface intersecting said workpiece surface is described in the NC program prepared by the time of the entry of said milling command is determined in said step (a).

# FIG.1

START

EXAMINE PRODUCT DIMENSION AND WORKPIECE DIMENSION — S1

DISAGREEING WITH PRODUCT DIMENSION ? — S2

NO

YES

DISPLAY WARNING — S3

TO BE CONTINUED ? — S4

NO

YES S5

CONTINUE PROCESSING

STOP

# FIG.2

```
              ┌─────────┐
              │  CPU    │──10
              └────┬────┘
                   │
   14              │         ┌─────────┐
    ┌─────────┐    │         │  ROM    │──11
    │ CONTROL │    │         └─────────┘
    │  PANEL  │────┤
    └─────────┘    │
  15               │         ┌─────────┐
    ┌─────────┐    │         │  RAM    │──12
    │ GRAPHIC │    │         └─────────┘
    │ DISPLAY │────┤
    │ DEVICE  │    │
    └─────────┘    │       ┌──────────────┐
  16               │       │ NONVOLATILE  │──13
    ┌─────────┐    │       │   MEMORY     │
    │ NC DATA │    │       └──────────────┘
  ←─│ OUTPUT  │────┤
    │ DEVICE  │    │
    └─────────┘    └──17
```

# FIG.3                              FIG.4

# INTERNATIONAL SEARCH REPORT

International Application No  PCT/JP89/00680

## I. CLASSIFICATION OF SUBJECT MATTER (if several classification symbols apply, indicate all) 6

According to International Patent Classification (IPC) or to both National Classification and IPC

Int. Cl⁴        G05B19/403, 19/405

## II. FIELDS SEARCHED

### Minimum Documentation Searched 7

| Classification System | Classification Symbols |
|---|---|
| IPC | G05B19/403, 19/405 |

### Documentation Searched other than Minimum Documentation to the Extent that such Documents are Included in the Fields Searched 8

| | |
|---|---|
| Jitsuyo Shinan Koho | 1971 – 1989 |
| Kokai Jitsuyo Shinan Koho | 1971 – 1989 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 63-196906 (Fanuc Ltd.)<br>15 August 1988 (15. 08. 88)<br>Page 2, upper right column, line 17 to<br>lower right column, line 12<br>(Family : none) | 1 – 3 |
| A | JP, A, 63-62639 (NEC Corporation)<br>18 March 1988 (18. 03. 88)<br>Page 2, lower right column, line 1 to<br>page 3, upper right column, line 6 | 1 – 3 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| September 14, 1989 (14. 09. 89) | September 25, 1989 (25. 09. 89) |
| International Searching Authority | Signature of Authorized Officer |
| Japanese Patent Office | |

Form PCT/ISA/210 (second sheet) (January 1985)